Europäisches Patentamt

**European Patent Office**

**Office européen des brevets**

(19)

(11) Publication number: **0 033 303**
**A1**

# (12) EUROPEAN PATENT APPLICATION

(21) Application number: **81850003.5**

(22) Date of filing: **09.01.81**

(51) Int. Cl.³: **F 16 K 11/07**
**F 16 J 15/10**

(30) Priority: **23.01.80 SE 8000552**

(43) Date of publication of application:
**05.08.81 Bulletin 81/31**

(84) Designated Contracting States:
**AT BE CH DE FR GB IT LI LU NL**

(71) Applicant: **AB Mecman**
**P.O. Box 32035**
**S-126 11 Stockholm(SE)**

(72) Inventor: **Pettersson, Karl Styrbjörn**
**Terminsvägen 1**
**S-136 69 Handen(SE)**

(74) Representative: **Modin, Jan et al,**
**c/o Axel Ehrners Patentbyra AB Smalandsgatan 2**
**S-114 34 Stockholm(SE)**

(54) **Sealing device in valve casings.**

(57) A sealing body (10) is made in one piece of elastic material and comprises annular sealing portions (11-18) for effecting a seal axially between different chambers in the valve casing, as well as connecting portions (19a-25a, 19b, 20b, 24b) which connect the annular sealing portions (11-18) and are adapted to seal between complementary valve casing parts, e.g. between two casing halves.

Fig. 2

EP 0 033 303 A1

1

## Sealing device in valve casings.

The invention relates to a sealing device for effecting a fluid seal between different chambers in a valve casing or the like.

The problem behind the invention is to secure an effective seal in divided valve casings having different chambers, which are mutually separated axially by annular gaps having sealing rings inserted therein. "Divided valve casing" denote valve casings consisting of at least two complementary valve casing parts which upon mounting of a valve body, a valve slide or the like, are assembled and connected to each other, e.g. by screws, to form a complete valve (possibly after completion by connector plates or the like).

However, it is difficult to achieve a satisfactory sealing effect both axially in the annular gaps and radially outwardly between the mutually contacting part surfaces of the complementary parts of the valve casing, e.g. between two casing halves. Thus, there is rather a great risk of leakage in the contact areas between the respective annular gaps and the part surfaces.

The object of the invention is to achieve a sealing device, which eliminates the difficulties described above and secures a satisfactory sealing effect axially as well as radially. This object is achieved for a sealing device designed in accordance with claim 1. Suitable additional features appear from claims 2-4 and the detailed description below.

By manufacturing a unitary sealing body with annular sealing portions and connecting portions joining the annular portions, in order to seal the annular gaps and the spaces between the casing parts, respectively, as specified in claim 1, the risk of leakage in the contact areas between the annular gaps and the part surfaces is eliminated. Apart from a satisfactory sealing effect, the assembly is facilitated, since during assembly the various annular sealing portions are kept mutually fixed by means of the connecting portions and less separate parts are used. Moreover, divided valve casings are made possible at all in many cases, where it used to be necessary to manufacture the valve casing in one piece and to drill a central cavity, which possibly had to be supplementary treated. In contrast thereto, divided valve casings can preferably be cast without any need for mecanical fine treatment.

In principal, the valve casing may be divided in any way into several complementary parts. However, from the manufacture and assemply point of view, it is normally most practical to divide the valve casing into two halves along a parting plane, and to form the sealing body with diametrically opposed connecting portions for planar sealing between the valve casing halves. If the valve is to be exposed to relatively high pressures, it is suitable to insert the connecting portions of the sealing body into recesses or grooves in at least one of the mutualy contacting part surfaces, e.g. in a labyrinth configuration.

The invention is described further below with reference to the drawing, which illustrates a slide valve having a sealing device according to the invention.

Fig. 1 shows a central section through a 5-port, 2-position valve (corresponding connector plates with ports are not shown);

Fig. 2 shows in a perspective view an inventive sealing body inserted into the valve of Fig. 1; and

Fig. 3 shows in cross section a valve casing half with an inserted sealing body and a cylindrical sleeve with a valve slide.

The 5-port, 2-position valve shown on the drawing is provided with a two-part box-like casing 1 consisting of an upper casing half 1a and a lower casing half 1b. Upper and lower connector plates (not shown) can be mounted, in a way known per se, said plates having connector ports situated correspondingly.

The valve halves 1a,1b form together a central, elongated substantially cylindrical cavity 2 with five annular, axially rather wide grooves or chambers 3a, 3b, 3c, 3d, 3e, each of which communicating with a connector port (via the non-illustrated connector plates). At the casing ends, there are further annular chambers 4a, 4b and adjacent passages 5a,5b communicating with control ports, and end walls 6a,6b. In the cavity 2, there is a cylindrical sleeve 7 with a finely worked inside, and a valve slide 8 is displacably mounted within the cylindrical sleeve 7. The cylindrical sleeve 7 has circumferentially distributed holes 9a, 9b, 9c, 9d, 9e in the region of the annular chambers 3a,3b,3c, 3d and 3e, respectively, so that each connector port communicates with a corresponding part of the inside of the cylindrical sleeve 7. The valve slide is provided with a plurality of annular sealing elements for axial sealing against the inside of the cylindrical sleeve 7, so that in a way known per se different connector ports can be brought to communicate with each other by appropriate displacement of the valve slide 8 (by means of a pressurized fluid via anyone of the control ports).

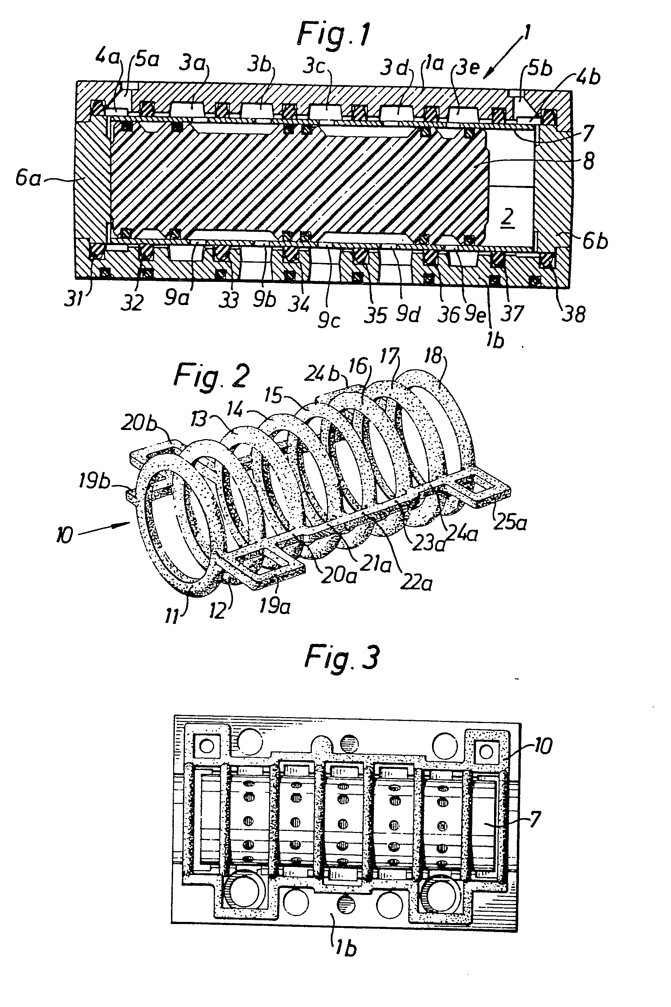

According to the present invention, a sealing body 10 is arranged so as to effect axial sealing between the outside of the cylindrical sleeve 7 and the inside of the valve casing 1, so that the adjacent annular chambers 3a,3b, 3c, 3d, 3e are mutually sealed and communicate with each other via the inside  of the cylindrical sleeve 7 only. For this purpose, the sealing body 10 is made in one piece (see Fig. 2), preferably consisting of nitrile rubber, comprising eight annular sealing portions 11-18 and diametrically opposed connecting portions 19a-25a and 19b--25b, respectively, which join the annular sealing portions 11-18 and which are planar and inserted into the parting plane between the casing halves 1a,1b. Each casing half 1a, 1b is provided with ring grooves 31-38 for receiving the respective annular sealing portions 11-18 and, moreover, the lower casing half 1b has labyrinth grooves, into which the connecting portions 19-25 are inserted (compare Fig. 3). The depth of these labyrinth grooves are somewhat less than the thickness of the connecting portions 19-25 so as to ensure a sealing effect upon assembly of the casing halves.

The unitary sealing body 10 involves several advantages. In the first place, an effective sealing is secured between the annular chambers 3, in the annular gaps between the valve casing 1 and the cylindrical sleeve 7 (by means of the annular portions 11-18) as well as via the parting plane of the casing (by means of the connecting portions 19-25). In practice, it has turned out to be very difficult to achieve such sealing functions by separate sealing members, since leaks tend to appear in the contact areas between rings and planar sealing members.

In the second place, it greatly facilitates the assembly. Thus, the entire sealing body 10 can be mounted correctly onto the cylindrical sleeve in a single step, whereupon the cylindrical sleeve 7 with an internal valve slide 8 and the externally attached sealing body is inserted into the lower casing half 1b, as shown in Fig. 3. Thereafter, the end walls 6a, 6b are mounted and the upper casing half 1a is laid on top, and the casing halves 1a, 1b are fixed to each other by means of screw fasteners or the like.

The sealing device can be modified in several ways within the scope of the invention. In certain valve casings, the sealing device can possibly be divided into two or more sealing bodies, each of which comprising two or more annular sealing portions and connecting portions joining the annular portions. Moreover, the valve casing can be otherwise divided than the illustrated embodiment, e.g. in three or more valve casing portions or in two halves, which are divided in some other way, e.g. corrugated, in steps or in some other suitable way in various planes.

## C L A I M S

1. A sealing device for effecting a fluid seal between different chambers (3a-3e) in a valve casing (1) consisting of complementary valve casing parts (la,lb) or the like, c h a r a c - t e r i z e d in that the sealing device comprises at least one sealing body (10) made in one piece of elastic material and comprising,on the one hand,at least two annular sealing portions (11-18) for effecting a fluid seal axially in each annular gap between adjacent chambers (4a, 3a, 3b, 3c, 3d, 3e, 4b) in the valve casing (1) and, on the other hand, at least two connecting portions (19a-25a, 19b-25b), which connect the annular sealing portions (11-18) to each other and are adapted to seal between mutually contacting part surfaces of said complementary valve casing parts (la, lb).

2. A sealing device as set forth in claim 1, c h a r a c t e - r i z e d in that the connecting portions(19a-25a, 19b-25b) of the sealing body are located diametrically opposed and adapted to effect a planar seal between two valve casing halves (la,lb).

3. A sealing device as set forth in claim 1 or 2, c h a r a c - t e r i z e d in that the connecting portions(19a-25a, 19b-25b) are dimensioned to be inserted into recesses or grooves in at least one of said part surfaces.

4. A sealing device as set forth in anyone of claims 1-3, c h a - r a c t e r i z e d in that said annular sealing portions (11-18) are coaxial and substantially of equal size as well as dimensioned to seal between the inside of said valve casing (1) and the outside of a cylindrical sleeve (7) provided with openings (9a-9e) for communication between each chamber (3a-3e) in the valve casing (1) and the inside of the sleeve (7), wherein a valve slide (8) is slidably arranged inside the sleeve (7).

Fig. 1

Fig. 2

Fig. 3

European Patent
Office

**EUROPEAN SEARCH REPORT**

Application number

EP 81 85 0003.5

| Category | DOCUMENTS CONSIDERED TO·BE RELEVANT | | CLASSIFICATION OF THE APPLICATION (Int. Cl.³) |
|---|---|---|---|
| | Citation of document with indication, where appropriate, of relevant passages | Relevant to claim | |
| | US - A - 3 153 550 (HOLLETT)<br>* fig. 2 to 4 *<br>--- | 1-4 | F 16 K  11/07<br>F 16 J  15/10 |
| | FR - A - 1 394 242 (BECQ)<br>* fig. 1 to 4 *<br>--- | 1 | |
| A | DE - A1 - 2 516 359 (METALLI PRESSATI BONOMI LUMEZZANE)<br>--- | | |
| A | US - A - 3 952 775 (OGATA)<br>--- | | **TECHNICAL FIELDS SEARCHED (Int. Cl.³)** |
| A | US - A - 3 700 007 (SPARLING et al.)<br>--- | | |
| A | US - A - 2 532 614 (EVANS)<br>---- | | F 16 J  15/00<br>F 16 K   5/00<br>F 16 K  11/00<br>F 16 K  19/00 |

CATEGORY OF
CITED DOCUMENTS

X: particularly relevant
A: technological background
O: non-written disclosure  .
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| Berlin | 13-04-1981 | SCHLABBACH |

EPO Form 1503.1  05.78